# EUROPEAN PATENT APPLICATION

(11) **EP 3 089 469 A1**
(43) Date of publication of application: **02.11.2016**
(21) Application number: 14873967.5
(22) Date of filing: 24.12.2014
(51) Int. Cl.: H04N 21/63

(54) **DATA PROCESSING METHOD AND DEVICE IN CONTENT DELIVERY NETWORK**

(30) Priority: 24.12.2013 CN 201310723616; 24.12.2013 CN 201310723043; 24.12.2013 CN 201310723767; 24.12.2013 CN 201310723759
(71) Applicant: LE Holdings (Beijing) Co., Ltd., Beijing 100025 (CN); Lecloud Computing Co., Ltd., Chaoyang District Beijing 100025 (CN)
(72) Inventor: CAI, Jun, Beijing 100025 (CN); CHEN, Mingpeng, Beijing 100025 (CN); LIU, Jianxiong, Beijing 100025 (CN); WEI, Lizhi, Beijing 100025 (CN); HUANG, Qiaojia, Beijing 100025 (CN)
(74) Representative: Viering, Jentschura & Partner mbB Patent- und Rechtsanwälte
(86) International application number: PCT/CN2014/094841
(87) International publication number: WO 2015/096745

(57) **Abstract**

Disclosed are a data processing method and device in a content delivery network. The method comprises: sending a data request packet for multimedia content; receiving IP addresses of a plurality of remote devices, the IP addresses of the plurality of remote devices being assigned by a scheduling server in response to the data request packet for multimedia content; accessing the plurality of remote devices according to the received IP addresses of the plurality of remote devices; and downloading multimedia file content corresponding to the data request packet from one or more of the plurality of remote devices according to the data request packet. By means of the technical solution of the present application, a scheduling server can schedule, according to a data request packet for multimedia content, a terminal device of a user to access a remote device for a particular purpose, which improves access efficiency, and also makes data sharing between terminal devices more efficient and convenient, improving user experience.

## Description

### CROSS-REFERENCE

This application is based upon Chinese Patent Application 201310723043.8, titled "Scheduling Method, System and Terminal Device for Download Server", filed on December 24, 2013, Chinese Patent Application 201310723867.2, titled "Processing Method and System for Connected Content Delivery Network", filed on December 24, 2013, Chinese Patent Application 201310723616.7, titled "Data Processing Method and System for Content Delivery Network", filed on December 24, 2013, and Chinese Patent Application 201310723759.8, titled "Processing Method and System for Connected Content Delivery Network", filed on December 24, 2013, the entire contents of which are incorporated herein by reference.

### TECHNICAL FIELD

The present application relates to a content delivery network, and more particularly, to a data processing method and device for content delivery network.

### BACKGROUND

Under the influence of double factors including the trend of digital convergence and increasingly mature broadband network environment, provision of audio and video entertainment services is not a specialized service for conventional broadcasting TV practitioners. Moreover, telecommunication practitioners will not monopolize broadband access services. Network access function has already been provided by a mobile phone. With the development of technology, TV also provides a network access function. Therefore, there appears a so-called network TV, i.e., an Internet protocol television (Internet Protocol Television, "IPTV" for short).

The network TV transmits audio and video (AV) services in an online manner through the Internet, for example, Web TV, Internet TV, Connected TV and the like all belong to IPTV. The network TV integrates a computer with a TV, and also provides a network multifunctional application entertainment service platform besides the network access function, for example: watching TV, networking, telephoning, monitoring, sharing audios and videos, personalized advanced services, or the like. The network TV has the network access function and provides a network service platform, and will become a smart TV if an operating system such as Android of Google or iOS of Apple is introduced.

The rising of websites with rich multimedia contents greatly increases the practical applicability of such electronic devices as a mobile phone, a tablet, a network TV, or the like. However, video or audio contents can only be acquired when these devices are connected to the network. In order to publish and transmit these multimedia contents, a (Content Delivery Network or Content Distribution Network, often referred to as CDN) is established therefore. The content delivery network is a content distribution network, which can easily transmit the contents to a terminal user. A traditional content delivery network (Content Delivery Network or Content Distribution Network, often referred to as CDN) is a distributed content distribution network established on an IP network, which mainly adopts a center-edge server distribution manner.

Usually, the user has a plurality of different terminal devices, for example, a TV, a computer, a mobile phone, or the like. These terminal devices have the network access ability at present; therefore, all these terminal devices can be connected to the content delivery network and download multimedia content files from the content delivery network for viewing through a multimedia player disposed in the terminal device.

While multimedia content service providers have to provide a large number of multimedia contents so that users can be attracted to join in and become members. Therefore, it is necessary to have a relatively convenient manner so that a large number of users can conveniently search the multimedia contents to be viewed. Furthermore, if the user downloads a certain multimedia content file and stores the file in the terminal device used thereof, this multimedia content file can be shared to other users to download through technical support. On one hand, the network resources can be sufficiently utilized; and on the other hand, the storage and delivery burden of a central server can be decreased.

In conclusion, an effective and convenient method is required, so that data can be shared among the terminal devices.

### SUMMARY

A technical problem to be solved by the present application is sharing multimedia content files among a plurality of terminal devices, which divides the multimedia content file into a plurality of fragments and establishes a multimedia content file index table according to the fragments so that retrieval can be conducted according to the multimedia content file index table, and data can be shared among the terminal devices.

In order to fulfill the foregoing objects, the embodiments of the present application adopt the following technical solutions.

According to a first aspect, there is provided a data processing method for content delivery network applicable to a terminal device, including:
sending a multimedia content data request packet;
receiving IP addresses of a plurality of remote devices, wherein the IP addresses of the plurality of remote devices are assigned by a scheduling server in response to the multimedia content data request packet;
accessing the plurality of remote devices according to the received IP addresses of the plurality of remote devices; and
downloading multimedia file contents corresponding to the data request packet from one or more of the plurality of remote devices according to the data request packet.

According to a second aspect, a computer-readable record medium recording a program configured to conduct the method above is provided.

According to a third aspect, a data processing device for content delivery network is provided, the device including:
a transmission module configured to send a multimedia content data request packet and receive IP addresses of a plurality of remote devices, wherein the IP addresses of the plurality of remote devices are assigned by a scheduling server in response to the multimedia content data request packet; and
a downloading module configured to access the plurality of remote devices according to the received IP addresses of the plurality of remote devices; and configured to download multimedia file contents corresponding to the data request packet from one or more of the plurality of remote devices according to the data request packet.

According to the method and the device provided by the present application, the terminal device of a user may receive the assignment of the scheduling server according to the multimedia content data request packet, and access the remote devices on purpose, which increases the access efficiency, and also makes the data shared among the terminal devices more effective and convenient, and improves the user experience.

### BRIEF DESCRIPTION OF THE DRAWINGS

Fig. 1 is a flow chart of a method, according to a first embodiment of the present application.
Fig. 2 is a flow chart of a method, according to a fifth embodiment of the present application.
Fig. 3 is a schematic diagram, according to a seventh embodiment of the present application.
Fig. 4 is a schematic diagram, according to a ninth embodiment of the present application.
Fig. 5 is a schematic diagram, according to a tenth embodiment of the present application.

### PREFERRED EMBODIMENTS

The implementation manners of the present application will be explained in details with reference to the drawings and embodiments hereinafter, so that the realization process of how to solve the technical problems using a technical means and achieve the technical efficacy can be sufficiently understood and implemented accordingly.

The implementation manners of the present application will be explained in details with reference to the drawings and embodiments hereinafter, so that the realization process of how to solve the technical problems using a technical means and achieve the technical efficacy can be sufficiently understood and implemented accordingly.

Certain terms are used throughout the description and following claims to refer to particular components. Those skilled in the art will appreciate that hardware manufacturers may refer to a component by different names. This description and following claims do not intend to distinguish between components that differ in name but in function. In the throughout description and following claims, the term "include" is used in an open-ended fashion, and thus should be interpreted to mean "include, but not limited to ... ". "Approximately" refers to that in an acceptable error range, those skilled in the art can solve the technical problem in a certain error range and substantially reach the technical effects. Also, the term "couple" is intended to mean either an indirect or direct electrical coupling way. Accordingly, if a first device is coupled to a second device, it means that the first device can be directly and electrically coupled to the second device, or indirectly and electrically coupled to the second device through other devices or coupling ways. The subsequent description refers to the preferred embodiments for implementing the present application; however, the description aims at explaining the general principle of the present application, but is not intended to define the scope of the present application. The protection scope of the present application shall be subjected to the claims appended.

It should also be illustrated that the terms "include", "comprise" or any variation thereof herein refer to "including but not limited to". Therefore, in the context of a process, method, object or device that includes a series of elements, the process, method, commodity or device not only includes such elements, but also includes other elements not specified expressly, or may include inherent elements of the process, method, commodity or system. Unless otherwise specified, in the context of "include a ...", the process, method, commodity or system that includes or comprises the specified elements may also include other identical elements.

### Application Scenarios of the Present Application

The solution of the present application is applicable when a user uses a network TV or a smart TV to connect to a multimedia website to download multimedia contents to view;
the solution of the present application is applicable when the user uses a digital multimedia conversion box as a device for receiving an external signal source to download multimedia contents to view;
the solution of the present application is applicable when the user uses a program (app) in a smart TV, a tablet or a mobile phone to connect to a multimedia website to download multimedia contents to view; and
the solution of the present application is applicable when the user uses a laptop computer or a desktop computer to download multimedia contents to view.

Certainly, the present application is not limited to the above application scenarios, and other scenarios relating to using electronic apparatuses or devices having network access ability are also applicable.

### First Embodiment

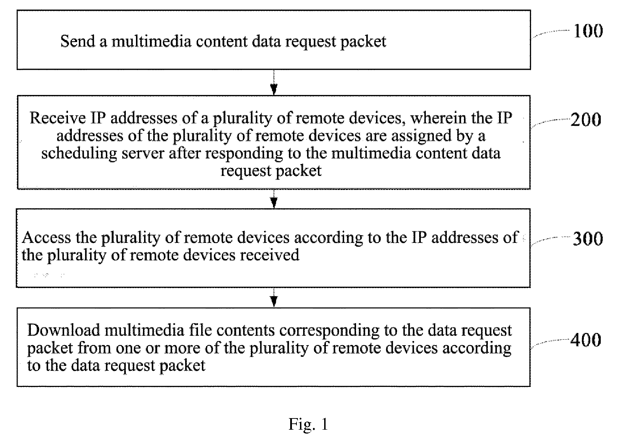

Fig. 1 is a flow chart of a method, according to a first embodiment of the present application.

Referring to Fig. 1, the embodiment of the present disclosure provides a data processing method for content delivery network, including the following steps.

In step S100, a multimedia content data request packet is sent.

In step S200, IP addresses of a plurality of remote devices are received, wherein the IP addresses of the plurality of remote devices are assigned by a scheduling server in response to the multimedia content data request packet.

In step S300, the plurality of remote devices are accessed according to the received IP addresses of the plurality of remote devices.

In step S400, multimedia file contents corresponding to the data request packet are downloaded from one or more of the plurality of remote devices according to the data request packet.

To be specific, in step S100, a user selects a certain multimedia content to be viewed through a user operation interface and sends a multimedia content data request packet.

In step S200, the remote device after receives the multimedia content data request packet, will send the data request packet to a scheduling server, and the scheduling server responds to the multimedia content data request packet and provides the IP addresses of the plurality of remote devices. After the scheduling server provides the IP addresses of the plurality of remote devices, the terminal device receives the IP addresses of the plurality of remote devices.

The terminal device will usually be matched with a certain network operator; therefore, the data requested will be transmitted to a remote device arranged in the network operator by the terminal device. The remote device after receiving the data requested, will send the data requested to the scheduling server. The scheduling server is also arranged in the same network operator.

During specific implementation, the IP addresses of other terminal devices that can be communicated with the terminal devices can be configured in advance in the same content delivery network for the terminal devices. The user selects a certain multimedia content to be viewed through the user operation interface, and sends a multimedia content data request packet to other devices corresponding to the IP address IP addresses configured in advance.

In step S300, the plurality of remote devices are accessed according to the received IP addresses of the plurality of remote devices. The remote device having a quicker download speed will be preferentially selected usually to download data according to the download speeds of the remote devices.

In step S400, the multimedia file contents corresponding to the data request packet is downloaded from one or more of the plurality of remote devices according to the requested contents of the data request packet. Because the contents of the data request packet are different, it may either be one download task or more download tasks. Moreover, the download speeds of the remote devices may also be different; therefore, one or more of the plurality of remote devices having a quicker speed are selected to download respectively with reference to the foregoing conditions.

To be specific, see the following embodiments for the selecting and downloading manners.

### Second Embodiment

The embodiment is based on the first embodiment. The method, after the step S400 of downloading the multimedia file contents corresponding to the data request packet from one or more of the plurality of remote devices according to the data request packet, further includes the following step.

In step S410, when one or more of the plurality of remote devices stores the fragmented numbers of the multimedia content file corresponding to the identity, the data fragments corresponding to the fragmented numbers in the data request packet are downloaded from one or more of the plurality of remote devices.

Wherein, the plurality of remote devices stores at least one multimedia content file and a multimedia content file index table, the multimedia content file is divided into a plurality of fragments and saved in the remote devices; each fragment is corresponding to a fragment number, the multimedia content file index table has a group of fragment numbers corresponding to the multimedia content files saved in the remote devices. To be specific, the multimedia content file index table stores the fragment numbers of each multimedia content, and the memory addresses of the multimedia contents corresponding to the fragment numbers (for example: memory offset and end address in a local disk). The multimedia content data request packet includes an identity of the multimedia content file and fragment numbers of the data fragments. The multimedia contents may either be audio contents, video contents or a combination of the audio contents and video contents.

The multimedia content data request packet includes the identity of the multimedia content file and the fragment numbers of the plurality of data fragments divided from the multimedia content file, wherein the multimedia content file is divided into a plurality of data fragments according to a pre-determined size. After the remote device receives the multimedia content data request packet, the multimedia content file index table is determined whether to have the names and the fragment numbers of the multimedia content files; if yes, then partial contents corresponding to the fragmented numbers in the multimedia content files are downloaded from the remote device. By downloading different data fragments of the same multimedia content from different remote devices, sharing the multimedia data content among different terminal devices is shared, so that network resources are sufficiently used, and the burden of the server in the content distribution network is eased at the same time. The scheduling server selects the remote device having a shortest path to the terminal sending a service request in the content distribution network to provide a data sharing service, which effectively and conveniently implements to deliver and share the multimedia contents.

Further, the scheduling server records a download record of the terminal devices, the download record including: an IP address of the terminal device sending a data request and an identity of the multimedia content file requested, which facilitates scheduling the terminal device which has downloaded the corresponding multimedia contents to provide services for other terminal devices next time.

The scheduling server selects one or more terminal devices according to the identity corresponding to the multimedia contents and the download record of the terminal devices recorded by the scheduling server, and assigns the IP address of the selected terminal device to the terminal device sending a data request.

Moreover, the remote device is selected from one or a plurality of a group consisting of a plurality of edge servers and a plurality of terminal devices. Wherein, the data request packet carries the identity corresponding to the multimedia contents which is requested to be downloaded. The scheduling server selects one or more of the remote terminals according to the identity corresponding to the multimedia contents, the types of the multimedia content files saved in the plurality of remote devices registering at the scheduling server, the capacity of the plurality of remote devices and the bandwidth of the plurality of remote devices, and assigns the selected remote device to the terminal device sending a data request. Wherein, the remote device may be an edge server. The scheduling server will preferentially select and assign the remote device which stores the multimedia content file corresponding to the identity, and have small load and wide bandwidth.

### Third Embodiment

The embodiment is based on the second embodiment. The method, after the step S410 of downloading the data fragments corresponding to the fragmented numbers in the data request packet from one or more of the plurality of remote devices, further includes the following steps.

In step S450, the download speed when downloading the data fragments corresponding to the fragmented numbers in the data request packet from one or more of the plurality of remote devices is recorded, and the download speed is compared with a pre-determined reference value, so as to acquire a bandwidth condition.

In step S460, the bandwidth condition is responded to, and an access mode for the terminal device to access the content delivery network is determined, wherein the access mode includes: turning on a data uploading mode, and turning off the data uploading mode.

To be specific, the access mode includes turning on the data uploading mode and turning off the data uploading mode. When the bandwidth condition allows uploading data, the terminal device turns on the data uploading mode; and when the bandwidth condition does not allow uploading data, close the data uploading mode of the terminal device.

In another embodiment, after the download speed is recorded, the terminal devices may also respectively judge the time for returning the data of the remote devices, so as to sort the plurality of remote devices according to the speed. Usually, the remote devices sorted in the front represent fast download speed, and the remote devices sorted in the back represent slow download speed.

While in another embodiment, after a predetermined time, the download speeds of the assigned remote devices is sorted again, and the remote devices sorted in the front are preferentially selected to download multimedia content files according to a new sequence.

As time passed, the download speeds of the remote devices may be changed; therefore, after a predetermined time, the terminal devices (or general transmission platform module) will sort the download speeds of the assigned remote devices again, so that data can be downloaded by the remote device with quickest download speed forever.

In another embodiment, when the terminal device turns on the data uploading mode, the transmission module responds to the multimedia content data request packet of another remote device so as to transmit other multimedia contents saved in the terminal device, and the conversion module converts multimedia contents corresponding to the local data format of the terminal device into a multimedia content file in the general format.

The remote device is selected from one or a plurality of a group consisting of a plurality of edge servers and a plurality of terminal devices. To be specific, the remote device in the embodiment may either be the edge server aforementioned or the terminal device aforementioned; therefore, a mobile terminal or a fixed terminal may be used in the case that the hardware architecture of the terminal device is cooperative. However, the operational capability of a central processing unit of the mobile terminal is poorer than the operational capability of a central processing unit of the fixed terminal usually; therefore, only the fixed terminal is incorporated into the access range of the remote devices usually.

### Fourth Embodiment

The embodiment is based on the second embodiment. The method, after the step S410 of downloading the data fragments corresponding to the fragmented numbers in the data request packet from one or more of the plurality of remote devices, further includes the following steps.

In step S4101, the download speeds of the plurality of remote devices are determined so as to sort the plurality of remote devices according to the download speeds.

In step S4102, the remote devices sorted in the front are preferentially selected to download according to the plurality of remote devices sorted.

In step S4101, the terminal devices respectively judge the time of returning the data of the plurality of remote devices, so as to sort the plurality of remote devices according to the speed. Usually, the remote devices sorted in the front represent fast download speed, and the remote devices sorted in the back represent slow download speed.

In step S4102, the terminal devices preferentially select the remote devices sorted in the front to download the multimedia content files in subsequent download according to the remote devices sorted.

In one embodiment, the terminal devices will divide the multimedia content data file to be viewed by the user into a plurality of portions, i.e., a plurality of the data fragments, wherein the quantity of the portions divided is corresponding to the quantity of the quantity of the remote devices assigned by the scheduling server and configured to download.

To be specific, it is presumed that the scheduling server provides three remote devices, then the general terminal device will divide the multimedia data file to be viewed by the user into three portions, for example, the proportion thereof is 7:2:1; therefore, there will be a first portion, a second portion and a third portion. That is to say, the remote device sorted in the first downloads the most urgent data, the remote device sorted in the second downloads relatively urgent data, and the remote device sorted in the third downloads the less urgent data. Therefore, the data of the first portion is the most urgent data at this moment, representing the data that the user will view or hear, and will be downloaded by the remote device sorted in the first. The data of the second portion is the data which is relatively urgent, representing the data that the user will view or hear, and will be downloaded by the remote device sorted in the second. The data of the third portion is the data which is less urgent, is usually the tail portion of the multimedia file, and will be downloaded by the remote device sorted in the third.

In one embodiment, after a predetermined time, the terminal device sorts the download speeds of the assigned remote devices again, and preferentially selects the remote devices sorted in the front to download multimedia content files according to a new sequence.

As time passed, the multimedia content to be played will be defined as urgent data; therefore, it needs to be downloaded urgently to avoid the user suffering downloading delay. As time passed, the download speeds of the edge servers may be changed; therefore, after a predetermined time, the terminal device will sort the download speeds of the assigned remote devices again, so that urgent data can be downloaded by the remote device with quickest download speed forever.

### Fifth Embodiment

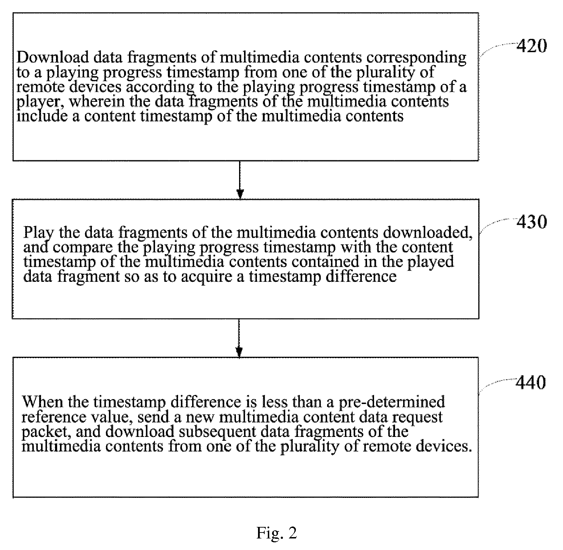

Fig. 2 is a flow chart of a method, according to a fifth embodiment of the present application.

Referring to Fig. 2, the embodiment is based on the first embodiment. The method, after the step S400 of downloading the multimedia file contents corresponding to the data request packet from one or more of the plurality of remote devices according to the data request packet, further includes the following steps.

In step S420, data fragments of multimedia contents corresponding to the playing progress timestamp are downloaded from one of the plurality of remote devices according to the playing progress timestamp of the player, wherein the data fragments of the multimedia contents include a content timestamp of the multimedia contents.

In step S430, the data fragments of the multimedia contents downloaded are played, and the playing progress timestamp is compared with the content timestamp of the multimedia contents contained in the played data fragment so as to acquire a timestamp difference.

In step S440, when the timestamp difference is less than a pre-determined reference value, a new multimedia content data request packet is sent, and subsequent data fragments of the multimedia contents are downloaded from one of the plurality of remote devices.

The data request packet herein includes a playing progress timestamp of a player arranged in the terminal device.

In step S420, the data fragments of the multimedia file contents corresponding to the playing progress timestamp are downloaded from one or more of the plurality of remote devices according to the data request packet. To be specific, the multimedia content is divided into a plurality of data fragments, each fragment has a corresponding content timestamp, and the content timestamp can be used by the player for comparison. Therefore, the player just compares the current playing progress timestamp with the content timestamp of the multimedia content being played presently. In this step, the data fragments of the multimedia contents corresponding to the timestamp on the current position can be downloaded only, rather than all the data fragments.

In step S430, the data fragments of the multimedia contents downloaded are played, and the current playing progress timestamp of the player is compared with the content timestamp of the data fragments of the multimedia contents played, so as to acquire a timestamp difference. In step S440, when the timestamp difference is less than a pre-determined reference value, a new multimedia content data request packet is sent, and subsequent data fragments of the multimedia contents are downloaded from one of the plurality of remote devices.

For example, the plurality of data fragments of the multimedia contents are replaced by a plurality of fragments to describe hereinafter. The multimedia content file saved in the remote devices are divided into a plurality of fragments and saved; therefore, during division, the content timestamp corresponding to each fragment is saved as information. For example, a 60min multimedia content file is divided into four fragments, then each content timestamp Tstamp will be Tstamp=0, Tstamp=15, Tstamp=30 and Tstamp=45. During downloading, the terminal devices may download the multimedia contents of the first portion and the second portion firstly, and the information of the content timestamp will also be acquired during downloading. The current playing progress timestamp of the player refers to the corresponding time when playing the multimedia content file; taking the forementioned 60min multimedia content file for example, when the multimedia content file of the second portion is played, and the multimedia content file is played on the 18^{th} minute, then the current playing progress timestamp Pstamp=18, the current content timestamp Tstamp=15, and next content timestamp Tstamp=30. Because the file has been played for 3min, the multimedia content file corresponding to next content timestamp will be played in 12min; it is provided that the rest 12min is determined to be less than the pre-determined reference value after playing for 3min according to the current download speed, then the multimedia content file of the third portion will be downloaded.

In the foregoing steps, when the timestamp difference is less than a pre-determined reference value, it can represent that the currently downloaded contents corresponding to the content timestamp is to be completely played. While in another embodiment, if the multimedia content file of the downloaded portion is temporarily saved in a cache, then it can also represent that the multimedia content file of the downloaded portion temporarily saved in the cache has been completely played or will be completely played.

### Sixth Embodiment

The embodiment is based on the fifth embodiment. The method, after the step S420 of downloading the data fragments of the multimedia contents corresponding to the playing progress timestamp from one of the plurality of remote devices according to the playing progress timestamp of the player further includes the following steps.

In step S4201, the download speeds of the plurality of remote devices are determined so as to sort the plurality of remote devices according to the download speeds.

In step S4202, one remote device sorted in the front is preferentially selected to download the data fragments of the multimedia content files corresponding to the playing progress timestamp according to the plurality of remote devices sorted.

The terminal devices respectively judge the time of returning the data of the plurality of remote devices, so as to sort the plurality of remote devices according to the speed. Usually, the remote devices sorted in the front represent fast download speed, and the remote devices sorted in the back represent slow download speed.

In the embodiment, steps S4201 and S4202 may either be conducted after step S420, or be conducted when starting step S420.

Wherein, the multimedia content file is divided into a plurality of portions, wherein the quantity of the plurality of portions divided is corresponding to the quantity of the remote devices assigned by the scheduling server and configured to download. The multimedia contents may either be audio contents, video contents or a combination of the audio contents and video contents.

In another embodiment, the method according to the present application, after completing step S420, further includes step S4203: after a predetermined time, sorting the download speeds of the assigned remote devices again, and preferentially selects the remote devices sorted in the front to download the multimedia content file according to a new sequence. It should be noted that the step S4203 may also be conducted after step 430 or step 440.

As time passed, the download speeds of the remote devices may be changed; therefore, after a predetermined time, the terminal device will sort the download speeds of the assigned remote devices again, so that the data of the multimedia contents can be downloaded by the remote device with quickest download speed forever.

### Seventh Embodiment

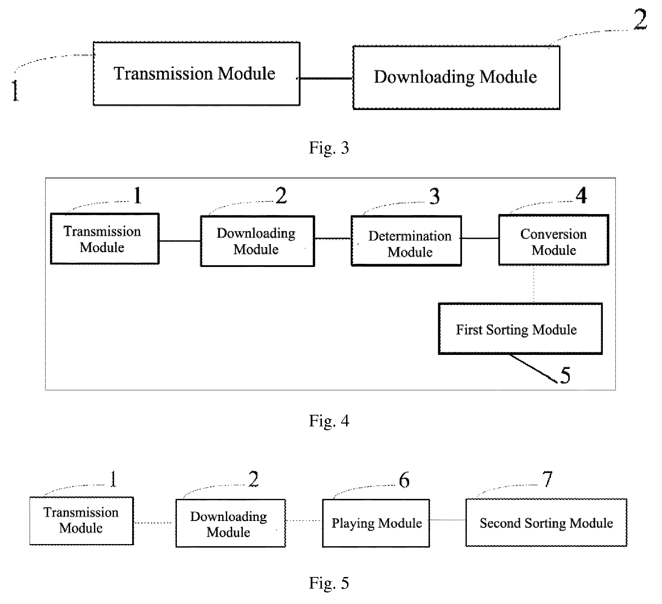

Fig. 3 is a schematic diagram, according to a seventh embodiment of the present application.

Referring to Fig. 3, the embodiment of the present application provides a data processing device for content delivery network, including:
a transmission module 1 configured to send a multimedia content data request packet and receive IP addresses of a plurality of remote devices, wherein the IP addresses of the plurality of remote devices are assigned by a scheduling server in response to the multimedia content data request packet; and
a downloading module 2 configured to access the plurality of remote devices according to the received IP addresses of the plurality of remote devices; and configured to download multimedia file contents corresponding to the data request packet from one or more of the plurality of remote devices according to the data request packet.

The multimedia content data request packet herein includes an identity of the multimedia content file and fragment numbers of the data fragments. The multimedia contents may either be audio contents, video contents or a combination of the audio contents and video contents.

Please refer to the following embodiments or the foregoing method embodiments for the detailed functions and applications of the transmission module 1 and the downloading module 2.

### Eighth Embodiment

The embodiment is based on the seventh embodiment.

Each of the remote devices stores at least one multimedia content file and an index table corresponding to the at least one multimedia content file, wherein, the multimedia content file is divided into a plurality of data fragments according to a pre-determined size and saved in the remote device, and the index table corresponding to the multimedia content file has the data fragments of the multimedia content file and fragmented numbers distributed for each of the data fragments; the multimedia content data request packet includes an identity of the multimedia content file and the data fragments; when the remote device stores the multimedia content file corresponding to the identity and the fragmented numbers, the downloading module 2 downloads the data fragments corresponding to the fragmented numbers in the data request packet from one or more of the plurality of remote devices.

To be specific, the multimedia content file index table stores the fragment numbers of each multimedia content, and the memory addresses of the multimedia contents corresponding to the fragment numbers (for example: memory offset and end address in a local disk).

In the embodiment, the multimedia content may either be audio contents, video contents or a combination of the audio contents and video contents.

Further, the scheduling server records a download record of the terminal devices, the download record including: an IP address of the terminal device sending a data request and an identity of the multimedia content file requested, which facilitates scheduling the terminal device which has downloaded the corresponding multimedia contents to provide services for other terminal devices next time.

The scheduling server selects one or more terminal devices according to the identity corresponding to the multimedia contents and the download record of the terminal devices recorded by the scheduling server, and assigns the IP address of the selected terminal device to the terminal device sending a data request. Wherein, the download record includes: downloading the IP addresses of the terminal devices of the multimedia content file corresponding to the data request packet and the identity of the multimedia content file.

Moreover, the scheduling server selects at least one of the remote terminals according to the identity of the multimedia content file, the types of the multimedia content files saved in the plurality of remote devices registering at the scheduling server, the capacity of the plurality of remote devices and the bandwidth of the plurality of remote devices, and assigns the selected remote device to the terminal device sending a data request.

In the embodiment, the multimedia content data request packet includes names and fragment numbers of the multimedia content files. After the remote device receives the multimedia content data request packet, the multimedia content file index table is determined whether to have the names and the fragment numbers of the multimedia content files; if yes, then partial contents corresponding to the fragmented numbers in the multimedia content files are downloaded from the remote device. By downloading different data fragments of the same multimedia content from different remote devices, sharing the multimedia data content among different terminal devices is shared, so that network resources are sufficiently used, and the burden of the server in the content distribution network is eased at the same time. The scheduling server selects the remote device having a shortest path to the terminal sending a service request in the content distribution network to provide a data sharing service, which effectively and conveniently implements to deliver and share the multimedia contents.

### Ninth Embodiment

Fig. 4 is a schematic diagram, according to a ninth embodiment of the present application.

Referring to Fig. 4, the embodiment is based on the eighth embodiment. The downloading module 2 records the download speed when downloading the data fragments corresponding to the fragmented numbers in the data request packet from one or more of the plurality of remote devices, wherein the device further includes:
a determination module 3 configured to compare the download speed with a predetermined reference value, so as to acquire a bandwidth condition; and respond to the bandwidth condition, and determining an access mode for the terminal device to access the content delivery network, wherein the access mode includes: turning on a data uploading mode, and turning off the data uploading mode.

In the embodiment, the determination module 3 is also configured to, when the bandwidth condition allows uploading data, open the data uploading mode of the terminal device; and when the bandwidth condition does not allow uploading data, close the data uploading mode of the terminal device.

Further, the device further includes a conversion module 4. When the terminal device turns on the data uploading mode, the transmission module responds to the multimedia content data request packet of another remote device so as to transmit other multimedia contents saved in the terminal device, and the conversion module 4 is configured to convert multimedia contents corresponding to the local data format of the terminal device into a multimedia content file in the general format.

Wherein, the local data format is different from the general format. Usually, different terminal devices will have different media data formats; therefore, the media data format used by the terminal device is called as the local data format. While the terminal devices or the terminal devices and the remote devices conduct transmission through one general format. In this way, the transmission module is only required to convert the general format into the local data format.

In a specific embodiment, a TS format may be selected as the general format for transmission. The TS format is a high definition packaging format, which is commonly seen in HDTV (High-Definition TV) files uploaded and downloaded through the network. Presently, common encoding technologies used in the TS format include H264, VC-1, and MPEG2.

The remote device is selected from one or a plurality of a group consisting of a plurality of edge servers and a plurality of terminal devices. To be specific, the remote device in the embodiment may either be the edge server forementioned or the terminal device forementioned; therefore, a mobile terminal or a fixed terminal may be used in the case that the hardware architecture of the terminal device is cooperative. However, the operational capability of a central processing unit of the mobile terminal is poorer than the operational capability of a central processing unit of the fixed terminal usually; therefore, only the fixed terminal is incorporated into the access range of the remote devices usually.

Moreover, the terminal device further includes a first sorting module 5 configured to judge the download speeds of the plurality of remote devices so as to sort the plurality of remote devices according to the download speeds.

Wherein, the downloading module 2 preferentially selects the remote devices sorted in the front to download the multimedia content files according to the remote devices sorted by the first sorting module 5.

Further, after a predetermined time, the first sorting module 5 sorts the download speeds of the assigned remote devices again, and preferentially selects the remote devices sorted in the front to download multimedia content files according to a new sequence given by the first sorting module 5.

### Tenth Embodiment

Fig. 5 is a schematic diagram, according to a tenth embodiment of the present application.

Referring to Fig. 5, the embodiment is based on the seventh embodiment. The terminal device further includes: a playing module 6. The data request packet herein includes a playing progress timestamp of a player arranged in the terminal device; and the downloading module 2 further downloads the data fragments of the multimedia file contents corresponding to the playing progress timestamp from one or more of the plurality of remote devices according to the data request packet, wherein the multimedia contents are divided into a plurality of data fragments, the data fragments comprise content timestamps of the multimedia contents, and each of the content timestamp is corresponding to one data fragment of the multimedia contents. The playing module 6 is configured to play the data fragments of the multimedia contents downloaded, and compare the playing progress timestamp with the content timestamp of the multimedia contents contained in the played data fragment so as to acquire a timestamp difference. Wherein, the transmission module 1, when the timestamp difference is less than a pre-determined reference value, further sends a new multimedia content data request packet so as to download subsequent data fragments of the multimedia contents from one of the plurality of remote devices. Moreover, the playing module 6 may use a player built in the terminal device and the quantity of the data fragments divided therein is corresponding to the quantity of the remote devices assigned by the scheduling server and configured to download.

Further, the terminal device further includes a second sorting module 7 configured to judge the download speeds of the plurality of remote devices so as to sort the plurality of remote devices according to the download speeds, wherein the downloading module preferentially selects one remote device sorted in the front to download the data fragments of the multimedia content files corresponding to the playing progress timestamp according to the plurality of remote devices sorted.

In one embodiment, after a predetermined time, the second sorting module 7 sorts the download speeds of the assigned remote devices again, so that the downloading module 2 preferentially selects the remote devices sorted in the front to download multimedia content files according to a new sequence.

As time passed, the download speeds of the remote devices may be changed; therefore, after a predetermined time, the second sorting module 7 will sort the download speeds of the assigned remote devices again, so that data can be downloaded by the remote device with quickest download speed forever.

Moreover, it should be noted that the transmission module, the downloading module, the determination module, the conversion module, the first sorting module, the second sorting module and the playing module involved in the present application are modules arranged in a smart TV terminal or a computer terminal, and may also be arranged in other mobile terminal or other fixed terminal in the case that the hardware architecture of the terminal device is cooperative. However, the operational capability of a central processing unit of the mobile terminal is poorer than the operational capability of a central processing unit of the fixed terminal usually; therefore, only the fixed terminal is a better selection so as to ensure that the transmission module, the downloading module, the determination module, the conversion module, the first sorting module, the second sorting module and the playing module involved in the present application can respectively and independently work and do not affect each other.

### Industrial applicability

According to the data processing method and system for content delivery network using the foregoing technical solutions provided by the present application, when accessing a remote device, the remote device may retrieve the multimedia content file index table established according to the fragments of the multimedia contents, so that the retrieval can be conducted according to the multimedia content file index table without retrieving complicated media content files. Through the multimedia content file index table established according to the fragments of the multimedia contents, each terminal device can also share the multimedia contents saved thereof according to the index table so as to acquire requested data; the terminal device may not download the multimedia contents using the quickest manner, but uses the timestamp comparison manner to timely download the multimedia contents, so that the data of the multimedia contents is downloaded to the terminal device in a stipulated time; and the player can timely acquire the data needed for soon playing all the time, and can also maintain the minimum bandwidth consumption needed for achieving the condition, so that the bandwidth consumption of the terminal device is in a controllable range to form an internal management system for quality of service (Quality of Service, QoS), and enable the bandwidth outlets of the entire terminal to be rationally allocated, and all the applications can acquire possibly sufficient bandwidth.

## Claims

1. A data processing method for content delivery network applicable to a terminal device,, **characterized in that**, comprising:
sending a multimedia content data request packet;
receiving IP addresses of a plurality of remote devices, wherein the IP addresses of the plurality of remote devices are assigned by a scheduling server in response to the multimedia content data request packet;
accessing the plurality of remote devices according to the received IP addresses of the plurality of remote devices; and
downloading multimedia file contents corresponding to the data request packet from one or more of the plurality of remote devices according to the data request packet.

2. The method according to claim 1, **characterized in that** the multimedia content data request packet comprises: an identity of the multimedia content file and fragment numbers of a plurality of data fragments divided from the multimedia content file; and
downloading the multimedia file contents corresponding to the data request packet from one or more of the plurality of remote devices according to the data request packet further comprises:
when one or more of the plurality of remote devices stores the fragmented numbers of the multimedia content file corresponding to the identity, downloading the data fragments corresponding to the fragmented numbers in the data request packet from one or more of the plurality of remote devices, wherein each of the remote devices stores at least one multimedia content file and an index table corresponding to the at least one multimedia content file, the plurality of data fragments are saved in the remote devices, and the index table corresponding to the multimedia content file is provided with fragmented numbers distributed for each of the data fragments.

3. The method according to claim 2, **characterized in that**,
the multimedia content file is divided into a plurality of data fragments according to a predetermined size.

4. The method according to claim 2, **characterized in that**,
the method, after downloading the data fragments corresponding to the fragmented numbers in the data request packet from one or more of the plurality of remote devices, further comprises: recording a download record of the terminal devices by the scheduling server, the download record comprising: downloading the IP addresses of the terminal devices of the multimedia content file corresponding to the data request packet and the identity of the multimedia content file; and
selecting at least one terminal device by the scheduling server according to the identity corresponding to the multimedia contents and the download record of the terminal devices recorded by the scheduling server, and assign the selected terminal device to the terminal device sending a data request.

5. The method according to claim 2, **characterized in that**,
the scheduling server selects at least one of the remote terminals according to the identity of the multimedia content file, the types of the multimedia content files saved in the plurality of remote devices registering at the scheduling server, the capacity of the plurality of remote devices and the bandwidth of the plurality of remote devices, and assigns the selected remote device to the terminal device sending a data request.

6. The method according to claim 2, **characterized in that**,
further comprising: recording the download speed when downloading the data fragments corresponding to the fragmented numbers in the data request packet from one or more of the plurality of remote devices, and comparing the download speed with a pre-determined reference value, so as to acquire a bandwidth condition; and
in response to the bandwidth condition, determining an access mode for the terminal device to access the content delivery network, wherein the access mode comprises: turning on a data uploading mode, and turning off the data uploading mode.

7. The method according to claim 6, **characterized in that**,
if the bandwidth condition allows uploading data, the terminal device turns on the data uploading mode; and
if the bandwidth condition does not allow uploading data, the terminal device turns off the data uploading mode.

8. The method according to claim 7, **characterized in that**:
when turning on the data uploading mode, the terminal device responds to the multimedia content data request packet of another remote device so as to transmit other multimedia contents saved in the terminal device, and converts the multimedia contents corresponding to the local data format of the terminal device into a multimedia content file in the general format.

9. The method according to any one of claims 6 to 8, **characterized in that**,
the remote device is selected from one or a plurality of a group consisting of a plurality of edge servers and a plurality of terminal devices.

10. The method according to claim 2, **characterized in that**, downloading the data fragments corresponding to the fragmented numbers in the data request packet from one or more of the plurality of remote devices further comprises:
determining the download speeds of the plurality of remote devices so as to sort the plurality of remote devices according to the download speeds; and
preferentially selecting the remote devices sorted in the front to download according to the plurality of remote devices sorted.

11. The method according to claim 1, **characterized in that**, the data request packet comprises a playing progress timestamp of a player arranged in the terminal device; and
downloading the multimedia file contents corresponding to the data request packet from one or more of the plurality of remote devices according to the data request packet further comprises:
downloading data fragments of multimedia contents corresponding to the playing progress timestamp from one of the plurality of remote devices according to the playing progress timestamp of the player, wherein the data fragments of the multimedia contents comprise a content timestamp of the multimedia contents;
playing the data fragments of the multimedia contents downloaded, and comparing the playing progress timestamp with the content timestamp of the multimedia contents contained in the played data fragment so as to acquire a timestamp difference; and
if the timestamp difference is less than a pre-determined reference value, sending a new multimedia content data request packet, and downloading subsequent data fragments of the multimedia contents from one of the plurality of remote devices.

12. The method according to claim 11, **characterized in that**, further comprising:
determining the download speeds of the plurality of remote devices so as to sort the plurality of remote devices according to the download speeds; and
preferentially selecting one remote device sorted in the front to download the data fragments of the multimedia content files corresponding to the playing progress timestamp according to the plurality of remote devices sorted.

13. The method according to claim 11 or 12, **characterized in that**:
the multimedia content file is divided into a plurality of data fragments, wherein the quantity of the data fragments divided is corresponding to the quantity of the remote devices assigned by the scheduling server and configured to download.

14. The method according to claim 11 or 12, **characterized in that**:
after a predetermined time, sort the download speeds of the assigned remote devices again, and preferentially select the remote devices sorted in the front to download multimedia content files according to a new sequence.

15. A computer-readable record medium recording a program configured to execute the method according to any one of claims 1 to 14.

16. A data processing device for content delivery network, **characterized in that**, comprising:
a transmission module configured to send a multimedia content data request packet and receive IP addresses of a plurality of remote devices, wherein the IP addresses of the plurality of remote devices are assigned by a scheduling server after responding to the multimedia content data request packet; and
a downloading module configured to access the plurality of remote devices according to the IP addresses of the plurality of remote devices received; and download multimedia file contents corresponding to the data request packet from one or more of the plurality of remote devices according to the data request packet.

17. The device according to claim 16, **characterized in that**, the multimedia content data request packet comprises: an identity of the multimedia content file and fragment numbers of plurality of data fragments divided from the multimedia content file, wherein the downloading module is further configured to:
when one or more of the plurality of remote devices stores the fragmented numbers of the multimedia content file corresponding to the identity, download the data fragments corresponding to the fragmented numbers in the data request packet from one or more of the plurality of remote devices, wherein each of the remote devices stores at least one multimedia content file and an index table corresponding to the at least one multimedia content file, the plurality of data fragments are saved in the remote devices, and the index table corresponding to the multimedia content file is provided with fragmented numbers distributed for each of the data fragments.

18. The device according to claim 17, **characterized in that**,
the multimedia content file is divided into a plurality of data fragments according to a predetermined size.

19. The device according to claim 17, **characterized in that**,
after the downloading module downloads the data fragments corresponding to the fragmented numbers in the data request packet from one or more of the plurality of remote devices, the scheduling server records a download record of the terminal devices, the download record comprising: downloading the IP addresses of the terminal devices of the multimedia content file corresponding to the data request packet and the identity of the multimedia content file; and
selecting at least one terminal device by the scheduling server according to the identity corresponding to the multimedia contents and the download record of the terminal devices recorded by the scheduling server, and assign the selected terminal device to the terminal device sending a data request.

20. The device according to claim 17, **characterized in that**,
the scheduling server selects at least one of the remote terminals according to the identity of the multimedia content file, the types of the multimedia content files saved in the plurality of remote devices registering at the scheduling server, the capacity of the plurality of remote devices and the bandwidth of the plurality of remote devices, and assigns the selected remote device to the terminal device sending a data request.

21. The device according to claim 17, **characterized in that**,
the downloading module records the download speed when downloading the data fragments corresponding to the fragmented numbers in the data request packet from one or more of the plurality of remote devices; and
the device further comprises a determination module configured to compare the download speed with a pre-determined reference value, so as to acquire a bandwidth condition; and respond to the bandwidth condition, and determine an access mode for the terminal device to access the content delivery network, wherein the access mode comprises: turning on a data uploading mode, and turning off the data uploading mode.

22. The device according to claim 21, **characterized in that**, the determination module is also configured to:
when the bandwidth condition allows uploading data, the terminal device turns on the data uploading mode; and
when the bandwidth condition does not allow uploading data, the terminal device turns off the data uploading mode.

23. The device according to claim 17, **characterized in that**,
when the terminal device turns on the data uploading mode, the transmission module responds to the multimedia content data request packet of another remote device so as to transmit other multimedia contents saved in the terminal device, and the terminal device further comprises: a conversion module configured to convert the multimedia contents corresponding to the local data format of the terminal device into a multimedia content file in the general format.

24. The device according to any one of claims 21 to 23, **characterized in that**,
the remote device is selected from one or a plurality of a group consisting of a plurality of edge servers and a plurality of terminal devices.

25. The device according to claim 17, **characterized in that**, further comprising:
a first sorting module configured to judge the download speeds of the plurality of remote devices so as to sort the plurality of remote devices according to the download speeds;
wherein, the downloading module preferentially selects the remote devices sorted in the front to download the multimedia content files according to the plurality of remote devices sorted.

26. The device according to claim 16, **characterized in that**, the data request packet comprises a playing progress timestamp of a player arranged in the terminal device; and the downloading module further downloads the data fragments of the multimedia file contents corresponding to the playing progress timestamp from one or more of the plurality of remote devices according to the data request packet, wherein the multimedia contents are divided into a plurality of data fragments, the data fragments comprise content timestamps of the multimedia contents, and each of the content timestamp is corresponding to one data fragment of the multimedia contents; and the device further comprises:
a playing module configured to play the data fragments of the multimedia contents downloaded, and compare the playing progress timestamp with the content timestamp of the multimedia contents contained in the played data fragment so as to acquire a timestamp difference;
wherein, the transmission module, when the timestamp difference is less than a predetermined reference value, further sends a new multimedia content data request packet so as to download subsequent data fragments of the multimedia contents from one of the plurality of remote devices.

27. The device according to claim 26, **characterized in that**, the device further comprises a second sorting module configured to judge the download speeds of the plurality of remote devices so as to sort the plurality of remote devices according to the download speeds, wherein the downloading module preferentially selects one remote device sorted in the front to download the data fragments of the multimedia content files corresponding to the playing progress timestamp according to the plurality of remote devices sorted.

28. The device according to claim 26 or 27, **characterized in that**, the multimedia content file is divided into a plurality of data fragments, wherein the quantity of the data fragments divided is corresponding to the quantity of the remote devices assigned by the scheduling server and configured to download.

29. The device according to claim 26 or 27, **characterized in that**, after a predetermined time, the second sorting module after a predetermined time, sorts the download speeds of the assigned remote devices again, and preferentially selects the remote devices sorted in the front to download multimedia content files according to a new sequence.
